# EUROPEAN PATENT SPECIFICATION

(11) **EP 3 406 383 B1**
(45) Date of publication and mention of the grant of the patent: **01.04.2026**
(21) Application number: 17460029.6
(22) Date of filing: 26.05.2017
(51) Int. Cl.: B23K 7/00, B23K 9/095, B23K 26/02, B23K 37/04, B23K 9/127, B23K 26/282, B23K 28/02, E04H 12/00, B23K 101/06

(54) **METHOD OF CUTTING OPENINGS IN FLAT, CONCAVE, CONVERGING, AND CONVEX SURFACES, AND WELDING FLAT, CONCAVE, CONVERGING, AND CONVEX SURFACES OF A WORKPIECE**
VERFAHREN ZUM SCHNEIDEN VON ÖFFNUNGEN IN FLACHE, KONKAVE, KONVERGIERENDE UND GEWÖLBTE FLÄCHEN UND ZUM SCHWEISSEN VON FLACHEN, KONKAVEN, KONVERGIERENDEN UND KONVEXEN OBERFLÄCHEN EINES WERKSTÜCKS
PROCÉDÉ DE DÉCOUPE D'OUVERTURES DANS DES SURFACES PLATES, CONCAVES, CONVERGENTES ET CONVEXES, ET SOUDAGE DE SURFACES PLATES, CONCAVES, CONVERGENTES ET CONVEXES D'UNE PIÈCE À USINER

(43) Date of publication of application: 28.11.2018
(73) Proprietor: Promotech Sp. Z.o.o., 15-620 Bialystok (PL)
(72) Inventor: Fedyk, Krzysztof, 15-533 Bialystok (PL); Lizewski, Marcin, 15-068 Bialystok (PL); Fedyk, Marcin, 15-533 Bialystok (PL); Pajor, Miroslaw Tadeusz, 71-220 Bezrzecze (PL); Stateczny, Kamil, 72-600 Swinoujscie (PL); Grudzinski, Marek, 72-006 Mierzyn (PL); Herbin, Pawel Wojciech, 74-400 Debno (PL)
(74) Representative: Jedrzejewski, Michal

(56) References cited:
- WO-A1-2011/133050
- US-B2- 9 427 827
- PAUL DVORAK: ""Can I get that door frame for you?" asks automated wind-tower welder", WINDPOWER ENGINEERING & DEVELOPMENT, 13 October 2013 (2013-10-13), XP055423933, Retrieved from the Internet <URL:http://www.windpowerengineering.com/manufacturing-mechanical-design/can-get-door-frame-asks-automated-wind-tower-welder/> [retrieved on 20171110]

## Description

### Description of the invention

The subject of the invention is a method of cutting openings in flat, concave, converging, and convex surfaces, and welding flat, concave, converging, and convex surfaces of a workpiece, see claim 1. Although these methods can be used in a variety of applications, they are particularly useful in the construction of wind turbine towers for which it is necessary to cut openings in their concave surfaces, e.g. inside the pipes that constitute tower sections.

The state of the art knows various methods of cutting openings in surfaces. The methods relating to the preparation of wind turbine tower components are relevant for the subject of the invention. Publication WO2006050723 discloses a method for manufacturing a wind turbine tower part, where the part comprises at least one wall segment and at least one segment with an opening. These parts are manufactured as separate, and subsequently assembled to form a ring. The part with an opening is made separately by torch cutting the piece and subsequent rolling.

US patent description US9427827B2 discloses manufacturing method, welding arrangement and door frame structure for a door frame of a windmill tower, wherein a hole is made in the tower shell for the door and a door frame is placed in the hole and welded on the shell. In the method, the shape of the door frame for the shell and the shape of the surface of the shell at the opening to be made are measured with a measuring sensor. Based on the measurements, a cutting torch is controlled so that an opening corresponding to the shape of the door frame is cut in the shell and bevels are cut in the edge of the opening on both sides. The door frame is welded on the shell with a weld, such as a double bevel, double J or square butt weld, from the inside and the outside of the shell.

The description of international patent application WO2011133050A1 (showing the preamble of claim 1) discloses a method and device for cutting openings in flat, concave, and convex surfaces, which specifies a device and method for the measurement of workpieces, machine installation procedure, installation of operating modules, and the cutting process with the use of the machine, in particular cutting openings for door frames in wind turbine tower structures. The method of cutting in this WO patent application is the following:
- distinctive points of the outline of the opening to be cut are measured;
- the parameters of the opening to be cut are entered into an electronic control unit of the device;
- an axis or axes of the opening to be cut are identified on the work surface;
- the opening cutting device is placed onto the work surface;
- the position of the opening cutting device relative to the work surface is determined using laser pointers that indicate the center of the device and the line that represents the axis of the opening;
- central grips and corner grips on the work surface are locked;
- a cutting module is placed at the extreme position of the opening to be cut;
- the shape of the opening is chosen, or the cutting path is calculated on the basis of the saved measurement values;
- cutting parameters are entered into the control unit;
- the surface is heated and cut along the selected path;
- the cut-out part of the surface is removed;
- the edges of the cut-out opening are sanded.

A drawback of this solution is that all the measurements are required to be made manually, and the results need to be entered into the machine controller; the shape of the convex or concave part is determined indirectly by measuring its distinctive points, which introduces considerable errors in calculating the path for the tool. This solution also prevents automatic adjustment of the path at local deformations that occur in particular during thermal cutting.

The aim of the invention is to develop a method and operating elements for faster and more accurate measurement, calibration, and operation of such a machine. The solution used in the machine enables direct measurement of the shape of the element to be cut, and measurement of the shape of the element inserted in the opening, e.g. a door frame. A more accurate measurement of the shape geometry, and a tracking system for the path of a joint reduces the duration of cutting and welding operations, and improves the quality of the cut and subsequent welding, reducing the number of welding defects in the joint.

Vision scanning systems are necessary due to several factors and due to the inherent characteristics of the technological operations, the examples of which are provided in the previous paragraph. One of the main challenges involves the deformations of the steel material due to heating. The original shape of the surface may deform due to the occurrence or release of strain in the base material or the welds. Also deformations that arise due to local structural weakness after cutting out an opening need to be considered. Depending on the place of support of a structure and the distribution of its weight, the metal sheet in the vicinity of the opening may lower or rise due to gravity. These factors mostly affect the vertical axis (Z coordinate of the Cartesian coordinate system).

According to a first aspect of the present invention, a method of cutting openings in flat, concave, convex, and converging surfaces is defined in claim 1 Preferably, after cutting the opening out, before commencing the next work processes, a subsequent measurement of the work surface geometry is made.

Preferably, if, in the course of the process, there is a deviation from the established path of the tool movement, the path of the tool movement is adjusted in the tool axis and/or in the plane perpendicular to the tool axis in a direction normal to the edge of the cut workpiece.

The scanning system carries out measurements using machine vision system or laser beams so as to measure the distance from the workpiece to the sensor. Preferably, the welding process is accompanied with real-time tracking of the welding path.

Preferably, if, in the course of the process, there is a deviation from the established path of the tool movement, the path of the tool movement is adjusted in the tool axis and/or in the plane perpendicular to the tool axis in a direction normal to the edge of the welded workpiece.

The nature of the device used in the methods according to the present invention is that it is equipped with a scanning head comprising a projector module, which projects onto the workpiece a structural image consisting of programmed patterns. This image is then recorded by two video cameras calibrated relative to the system, and the data are processed by a PC or a calculation unit of the machine. The cloud of points obtained in this way is then converted with the use of mathematical algorithms into a model of a solid object representing the workpiece, its shape, and the position of the main axes relative to the machine. This enables, in the course of cutting, the adjustment of the position of the head to maintain constant distance from the material taking into account its actual shape.

The second variant of operation, for direct assistance of the process of welding in a door frame, involves scanning the cut-out opening to determine the deformations due to local strain recovery. As deformations may be significant to the extent preventing proper welding, adjustments are made in the movement of the welding head based on the scanned opening edge. The scanning process is carried out in the same manner as in the previous step. An additional algorithm is also applied for the detection of the inner edge of the opening, and the triple-coordinate data are provided, after processing, to the main controller of the axis of the device for cutting openings in flat, concave, convex, and converging surfaces.

It is preferable for the scanning system to be easily detachable from the device for cutting openings in flat, concave, convex, and converging surfaces, which is important for the durability of the system and the correctness of downstream operations, i.e. cutting, welding, etc.

It is preferable for the machine to be equipped with a system of manipulators for manual control of all axes to move the working tool to any position without the use of the main control panel. The operation of a manipulator enables complex movement of several axes, therefore reducing the time required to set the machine in place before the commencement of the process. Locating manipulators next to the tool improves the ergonomics and movement precision, in particular for rotating axes.

The welded joint real-time tracking system allows the user to control any deviations of the actual path of the welded joint from the path established in the control system. Real-time welding path tracking systems are necessary mostly due to the action of heat transmitted into the material during the welding process. As heated steel expands, it distorts the original geometry of the structure, which necessitates the adjustment of the torch position. Another issue relates to the arrangement errors of the welded pieces. Additionally, in multi-pass welding it is necessary to adjust the position of the torch tip relative to the actual position of the filler metal applied in the previous pass. The tracking system consists of the sensors that track the actual position, whereas one sensor moves horizontally and the other moves vertically relative to the welding path and the path of the measurement system controller.

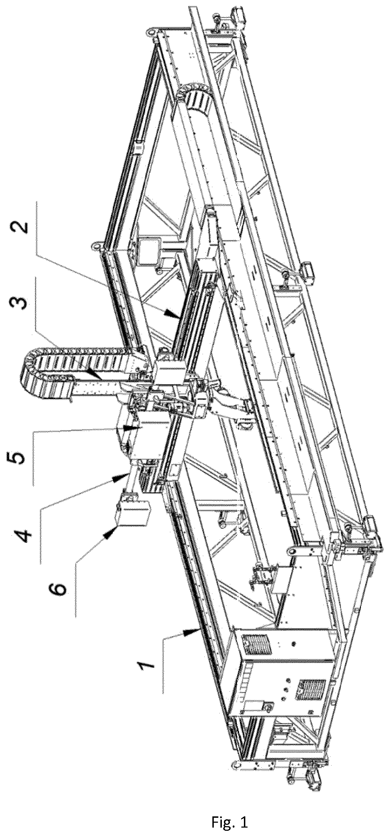

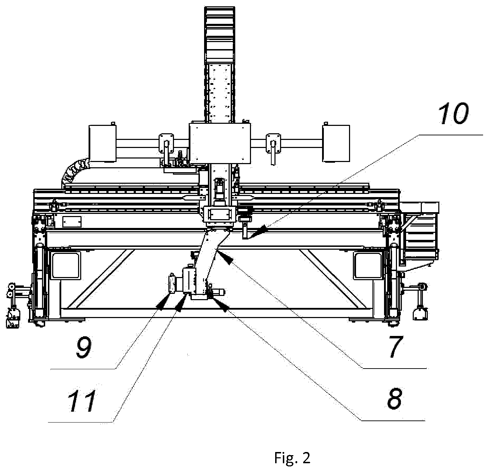

The subject of the invention is shown as an embodiment in figures, in which Fig. 1 shows a device for the implementation of the method in axonometric projection, and Fig. 2 shows the device in front view.

The support frame (1) of the machine, to which X-axis travel guides are attached, on which an Y-axis bottom bracket (2) moves, and on the guides installed on it a Z-axis system (3) moves, onto which the scanning system (4) is installed, which consists of a projector (5) and a camera system (6). The system (3) is equipped with a swivel bottom bracket (7) of the tool head, whereas the bottom bracket (7) includes a tool head swinging chuck (8) for the installation of various types of heads, e.g. for cutting or welding. Rotary axis manipulator systems are installed on the bottom bracket (7), and tracking system sensors are installed directly on the welding head. The bottom bracket (7) of the tool head is equipped with manipulators (9) for manual control of the rotary axes, and a manipulator (10) for control of the linear movements of the machine is installed on a Z-axis system (3) component. The bottom bracket (7) of the tool head is equipped with an alternative scanning system solution comprising a laser distance sensor (11).

This implements the method of cutting openings in flat, concave, convex, and converging surfaces, in which the geometry of the outline of the element to be welded into the workpiece is measured. Subsequently, the electronic control unit of the device uses the measurement data to plot the path of the cutting tool. Then, the IMCM device is placed on the surface. Then, the following steps are carried out:
1. the geometry of the work surface is measured using a scanning system;
2. cutting parameters are automatically entered into the control unit based on the measurement results;
3. the surface is heated and cut along the selected path;
4. the cut-out part of the surface is removed;
5. the edges of the cut-out opening are grinded.

The scanning system carries out measurements using machine vision system (4) so as to measure the distance from the workpiece to the sensor (11). After cutting the opening out, before commencing the next work processes, a subsequent measurement of the work surface geometry is made. If there is a deviation from the established path of the tool movement, the path of the tool movement is adjusted in the tool axis and/or in the plane perpendicular to the tool axis in a direction normal to the edge of the cut workpiece.

Whereas, in welding of flat, concave, convex, and converging surfaces of a workpiece in which the geometry of the outline of the element to be welded into the workpiece is measured, while subsequently an electronic control unit of the device uses the measurement data to plot the path of the welding tool, and subsequently the IMCM device is placed onto the work surface. Then, the following steps are carried out:
1. the geometry of the work surface is measured using a scanning system;
2. welding parameters are automatically entered into the control unit based on the measurement results;
3. the position of the tip of the welding tool relative to the workpiece is identified, in particular in relation of the frame and the weld joint;
4. the workpiece is heated and welded along the established path.

Additionally, the scanning system carries out measurements using machine vision system (4) so as to measure the distance from the workpiece to the sensor (11). The welding process is accompanied with real-time tracking of the welding path. Preferably, if there is a deviation from the established path of the tool movement, the path of the tool movement is adjusted in the tool axis and/or in the plane perpendicular to the tool axis in a direction normal to the edge of the welded workpiece.

## Claims

1. Method of cutting openings in flat, concave, convex, and converging surfaces, in which the geometry of the outline of the element to be welded into the workpiece is measured, while subsequently an electronic control unit of the device uses the measurement data to plot the path of the cutting tool, and the device for cutting openings in flat, concave, convex, and converging surfaces is placed onto the work surface, **characterised in that**:
1) the geometry of the work surface is measured using a scanning system which carries out measurements using machine vision (4) or laser beams so as to measure the distance from the workpiece to the scanning system, wherein the scanning system comprises a projector module (5), which projects onto the workpiece a structural image consisting of programmed patterns, and two video cameras (6) calibrated relative to the scanning system, whereby the projector (5) located in the scanning system projects onto the workpiece a structural image consisting of programmed patterns, this image is then recorded by the two video cameras (6), and the data are processed by the electronic control unit being a PC or a calculation unit, wherein the cloud of points obtained in this way is then converted with the use of mathematical algorithms into a model of a solid object representing the workpiece, its shape, and the position of the main axes relative to the machine, so as, in the course of cutting, to adjust the position of the head to maintain constant distance from the material taking into account its actual shape;
2) cutting parameters are automatically entered into the control unit based on the measurement results;
3) the surface is heated and cut along the selected path;
4) the cut-out part of the surface is removed;
5) the edges of the cut-out opening are grinded.

2. Method according to claim 1, **characterised in that** after cutting the opening out, before commencing the next work processes, a subsequent measurement of the work surface geometry is made.

3. Method according to claim 1, **characterised in that** if there is a deviation from the established path of the tool movement, the path of the tool movement is adjusted in the tool axis and/or in the plane perpendicular to the tool axis in a direction normal to the edge of the cut workpiece.

4. Method according one of the claims 1-3 **characterised in that** after the opening is cut out, a workpiece is welded to the cut-out hole according to the following steps:
1) the geometry of the work surface is measured using a scanning system, so as to determine the deformation caused by localised strain recovery, since the deformation can be significant to the extent that it prevents proper welding, adjustments are made to the movement of the welding head based on the scanned edge of the hole, the scanning process is carried out in the same way as in the cut-out stage, with an additional algorithm being used to detect the inner edge of the hole, and the triple coordinate data is provided, after processing, to the main axis controller of the device;
2) welding parameters are automatically entered into the control unit based on the measurement results;
3) the location of the tip of the welding tool relative to the workpiece is identified, in particular in relation of the frame and the groove weld
4) the workpiece is heated and welded along the established path.

5. Method according to claim 4, **characterised in that** the welding process is accompanied with real-time tracking of the welding path.

6. Method according to claim 4, **characterised in that** if there is a deviation from the established path of the tool movement, the path of the tool movement is adjusted in the tool axis and/or in the plane perpendicular to the tool axis in a direction normal to the edge of the cut workpiece.

## Patentansprüche

1. Verfahren zum Schneiden von Öffnungen in flache, konkave, konvexe und konvergierende Oberflächen, bei dem die Geometrie des Umrisses des in das Werkstück einzuschweißenden Elements gemessen wird, während anschließend eine elektronische Steuereinheit der Vorrichtung die Messdaten verwendet, um den Weg des Schneidwerkzeugs zu berechnen, und die Vorrichtung zum Schneiden von Öffnungen in flache, konkave, konvexe und konvergierende Oberflächen auf die Arbeitsfläche aufgesetzt wird, **dadurch gekennzeichnet, dass**:
1) die Geometrie der Arbeitsfläche mit einem Abtastsystem gemessen wird, das Messungen mit Hilfe von maschinellem Sehen (4) oder Laserstrahlen durchführt, um den Abstand vom Werkstück zum Abtastsystem zu messen, wobei das Abtastsystem ein Projektormodul (5), das ein aus programmierten Mustern bestehendes Strukturbild auf das Werkstück projiziert, und zwei relativ zum Abtastsystem kalibrierte Videokameras (6) umfasst,
wobei der im Abtastsystem befindliche Projektor (5) ein aus programmierten Mustern bestehendes Strukturbild auf das Werkstück projiziert, dieses Bild dann von den beiden Videokameras (6) aufgezeichnet wird und die Daten von der elektronischen Steuereinheit, die ein PC oder eine Recheneinheit ist, verarbeitet werden,
wobei die so erhaltene Punktwolke dann unter Verwendung mathematischer Algorithmen in ein Modell eines festen Objekts umgewandelt wird, das das Werkstück, seine Form und die Position der Hauptachsen relativ zur Maschine darstellt, um während des Schneidens die Position des Kopfes anzupassen, um einen konstanten Abstand zum Material unter Berücksichtigung seiner tatsächlichen Form aufrechtzuerhalten;
2) Die Schnittparameter werden auf der Grundlage der Messergebnisse automatisch in die Steuereinheit eingegeben.
3) Die Oberfläche wird erwärmt und entlang des ausgewählten Pfades geschnitten.
4) Der ausgeschnittene Teil der Oberfläche wird entfernt.
5) Die Kanten der ausgeschnittenen Öffnung werden geschliffen.

2. Verfahren nach Anspruch 1, **dadurch gekennzeichnet, dass** nach dem Ausschneiden der Öffnung vor Beginn der nächsten Arbeitsprozesse eine nachfolgende Messung der Werkstückoberflächengeometrie durchgeführt wird.

3. Verfahren nach Anspruch 1, **dadurch gekennzeichnet, dass** bei einer Abweichung vom festgelegten Weg der Werkzeugbewegung der Weg der Werkzeugbewegung in der Werkzeugachse und/oder in der zur Werkzeugachse senkrechten Ebene in einer Richtung normal zur Kante des geschnittenen Werkstücks angepasst wird.

4. Verfahren nach einem der Ansprüche 1-3, **dadurch gekennzeichnet, dass** nach dem Ausschneiden der Öffnung ein Werkstück gemäß den folgenden Schritten an die ausgeschnittene Öffnung geschweißt wird:
1) die Geometrie der Arbeitsfläche wird mit einem Scansystem gemessen, um die durch lokale Spannungsrückbildung verursachte Verformung zu bestimmen, da die Verformung so groß sein kann, dass sie ein ordnungsgemäßes Schweißen verhindert, werden auf der Grundlage der gescannten Kante der Öffnung Anpassungen an der Bewegung des Schweißkopfes vorgenommen, der Scanvorgang wird auf die gleiche Weise wie in der Ausschnittphase durchgeführt, wobei ein zusätzlicher Algorithmus zur Erkennung der Innenkante des Lochs verwendet wird, und die dreifachen Koordinatendaten werden nach der Verarbeitung an die Hauptachsensteuerung der Vorrichtung übermittelt;
2) Die Schweißparameter werden auf der Grundlage der Messergebnisse automatisch in die Steuereinheit eingegeben.
3) Die Position der Spitze des Schweißwerkzeugs relativ zum Werkstück wird identifiziert, insbesondere in Bezug auf den Rahmen und die Kehlnaht.
4) Das Werkstück wird erwärmt und entlang des festgelegten Pfades geschweißt.

5. Verfahren nach Anspruch 4, **dadurch gekennzeichnet, dass** der Schweißprozess mit einer Echtzeitverfolgung des Schweißpfades einhergeht.

6. Verfahren nach Anspruch 4, **dadurch gekennzeichnet, dass** bei einer Abweichung vom festgelegten Weg der Werkzeugbewegung der Weg der Werkzeugbewegung in der Werkzeugachse und/oder in der Ebene senkrecht zur Werkzeugachse in einer Richtung normal zur Kante des geschnittenen Werkstücks angepasst wird.

## Revendications

1. Procédé de découpe d'ouvertures dans des surfaces planes, concaves, convexes et convergentes, dans lequel la géométrie du contour de l'élément à souder dans la pièce à usiner est mesurée, tandis qu'ensuite une unité de commande électronique du dispositif utilise les données de mesure pour tracer la trajectoire de l'outil de découpe, et le dispositif de découpe d'ouvertures dans des surfaces planes, concaves, convexes et convergentes est placé sur la surface de travail, **caractérisé en ce que** :
1) la géométrie de la surface de travail est mesurée à l'aide d'un système de balayage qui effectue des mesures à l'aide d'une vision artificielle (4) ou de faisceaux laser afin de mesurer la distance entre la pièce à usiner et le système de balayage, le système de balayage comprenant un module de projection (5) qui projette sur la pièce à usiner une image structurelle composée de motifs programmés, et deux caméras vidéo (6) calibrées par rapport au système de balayage,
le projecteur (5) situé dans le système de balayage projetant sur la pièce à usiner une image structurelle composée de motifs programmés, cette image étant ensuite enregistrée par les deux caméras vidéo (6) et les données étant traitées par l'unité de commande électronique qui est un PC ou une unité de calcul,
dans lequel le nuage de points ainsi obtenu est ensuite converti à l'aide d'algorithmes mathématiques en un modèle d'objet solide représentant la pièce à usiner, sa forme et la position des axes principaux par rapport à la machine, de manière à ajuster, au cours de la découpe, la position de la tête afin de maintenir une distance constante par rapport au matériau en tenant compte de sa forme réelle ;
2) les paramètres de découpe sont automatiquement entrés dans l'unité de commande sur la base des résultats de mesure ;
3) la surface est chauffée et découpée le long du trajet sélectionné ;
4) la partie découpée de la surface est retirée ;
5) les bords de l'ouverture découpée sont meulés.

2. Procédé selon la revendication 1, **caractérisé en ce qu'**après avoir découpé l'ouverture, avant de commencer les processus de travail suivants, une mesure ultérieure de la géométrie de la surface de travail est effectuée.

3. Procédé selon la revendication 1, **caractérisé en ce que** s'il y a un écart par rapport au trajet établi du mouvement de l'outil, le trajet du mouvement de l'outil est ajusté dans l'axe de l'outil et/ou dans le plan perpendiculaire à l'axe de l'outil dans une direction normale au bord de la pièce découpée.

4. Procédé selon l'une des revendications 1 à 3, **caractérisé en ce qu'**après avoir découpé l'ouverture, une pièce est soudée au trou découpé selon les étapes suivantes :
1) la géométrie de la surface de travail est mesurée à l'aide d'un système de balayage, afin de déterminer la déformation causée par la récupération locale des contraintes, étant donné que la déformation peut être importante au point d'empêcher un soudage correct, des ajustements sont effectués sur le mouvement de la tête de soudage en fonction du bord balayé du trou, le processus de balayage est effectué de la même manière qu'à l'étape de découpe, un algorithme supplémentaire étant utilisé pour détecter le bord intérieur du trou, et les données de coordonnées triples sont fournies, après traitement, au contrôleur d'axe principal du dispositif ;
2) les paramètres de soudage sont automatiquement entrés dans l'unité de commande sur la base des résultats de mesure ;
3) l'emplacement de la pointe de l'outil de soudage par rapport à la pièce à usiner est identifié, en particulier par rapport au cadre et au soudage en rainure
4) la pièce est chauffée et soudée le long du trajet établi.

5. Procédé selon la revendication 4, **caractérisé en ce que** le processus de soudage s'accompagne d'un suivi en temps réel du trajet de soudage.

6. Procédé selon la revendication 4, **caractérisé en ce que** s'il y a un écart par rapport au trajet établi du mouvement de l'outil, le trajet du mouvement de l'outil est ajusté dans l'axe de l'outil et/ou dans le plan perpendiculaire à l'axe de l'outil dans une direction normale au bord de la pièce coupée.
